Europäisches Patentamt

European Patent Office

Office européen des brevets

(19)

(11) Veröffentlichungsnummer: **0 200 140**
**B1**

(12) **EUROPÄISCHE PATENTSCHRIFT**

(45) Veröffentlichungstag der Patentschrift:
05.04.89

(21) Anmeldenummer: 86105526.7

(22) Anmeldetag: 22.04.86

(51) Int. Cl.⁴: **F16L 5/02**

(54) **Vorrichtung zum Abdichten von von Rohrleitungen, Kabel o.dgl. durchsetzten Durchbrüchen.**

(30) Priorität: 02.05.85 DE 8512815 U

(43) Veröffentlichungstag der Anmeldung:
10.12.86 Patentblatt 86/45

(45) Bekanntmachung des Hinweises auf die Patenterteilung:
05.04.89 Patentblatt 89/14

(84) Benannte Vertragsstaaten:
CH DE LI NL

(56) Entgegenhaltungen:
CH-A- 412 484
DE-A- 1 196 447
DE-A- 3 102 710
DE-B- 1 204 472

(73) Patentinhaber: Rohrdurchführungstechnik Hans-Ullrich
Ihlenfeldt, Stader Strasse 56, D-2806 Oyten(DE)

(72) Erfinder: Ihlenfeldt, Hans-Ullrich, Stader Strasse 56,
D-2806 Oyten 1(DE)

(74) Vertreter: Eisenführ & Speiser, Martinistrasse 24,
D-2800 Bremen 1(DE)

## Beschreibung

Die Erfindung betrifft eine Vorrichtung zum Abdichten von von Rohrleitungen, Kabel o.dgl. durchsetzten Durchbrüchen von Wänden, Mauerwerk o.dgl., mit zwei axial beabstandeten, relativ zueinander bewegbaren scheibenförmigen und mindestens eine axial verlaufende Bohrung aufweisenden Spannelementen, zwischen denen eine aus elastischem Material bestehende Dichtung angeordnet und in dichtende Anlage am Außenumfang der Rohrleitung(en) sowie am Innenumfang des Durchbruchs preßbar ist, wobei die Dichtung aus zwei koaxial zueinander angeordneten, radial beabstandeten elastischen Hülsen besteht, von denen die radial innere Hülse einen dem Außenumfang der Rohrleitung o.dgl. angepaßten Innendurchmesser und die radial äußere Hülse einen Außendurchmesser aufweist, der dem Innenumfang des Durchbruchs entspricht.

Derartige Vorrichtungen sind seit langem bekannt, denn es kommt im Bauwesen häufig vor, daß Rohrleitungen und/oder Kabel von außen in ein Haus hinein- oder durch eine Wand hindurchgeführt werden müssen und daß dabei sichergestellt sein muß, daß die Räume bzw. Bereiche beiderseits der Wand voneinander isoliert bleiben.

Eine sehr einfache Abdichtvorrichtung der eingangs genannten Art besteht aus zwei kreisringförmigen Platten, die auf den beiden axialen Stirnflächen einer vergleichsweise dicken kreisringförmigen Gummischeibe angeordnet sind. Der Außendurchmesser der Platten ist etwas kleiner als der Außendurchmesser der Gummischeibe. Sowohl die beiden Platten als auch die Gummischeibe werden von einer fluchtenden Bohrung durchsetzt, durch die eine Rohrleitung o.dgl. hindurchgeführt wird. Es sind auch Ausführungen mit mehreren parallelen Axialbohrungen zum gleichzeitigen Abdichten mehrerer, durch einen gemeinsamen Durchbruch geführter Rohrleitungen bekannt.

Eine der beiden Platten der bekannten Vorrichtung ist mit beispielsweise drei Stehbolzen versehen, die durch entsprechende Bohrungen der Gummischeibe und durch entsprechende Bohrungen in der anderen Platte hindurchgeführt sind und an ihren freien Enden Gewinde aufweisen. Mit auf dieses Gewinde aufgeschraubten Muttern läßt sich der lichte Abstand zwischen den beiden Platten verkleinern. Hierdurch verringert sich die Dicke der Gummischeibe, und das verdrängte Gummi wird radial nach außen und nach innen gedrückt. Es legt sich dabei innen an den Außenumfang der die Axialbohrung durchsetzenden Rohrleitung und außen an den Innenumfang des Durchbruchs an. Die auf diese Weise erzielbare Abdichtung ist im allgemeinen zufriedenstellend. Eine gewisse Problematik ist gelegentlich dann gegeben, wenn die freiliegende Wandfläche innerhalb des Durchbruchs eine hohe Rauhigkeit oder Unregelmäßigkeit aufweist, wie es bei Durchbrüchen durch Betonwände vorkommt. Insbesondere in diesen Fällen wurde bisher zunächst ein Futterrohr in den Durchbruch eingebaut, welches dann seinerseits mit seiner vergleichsweise sauberen Innenfläche ein gut geeignetes Widerlager für die Abdichtvorrichtung bildete.

Wenngleich die bekannten Abdichtvorrichtungen vergleichsweise einfach aufgebaut waren, waren sie doch nicht preiswert herzustellen. Es ist zwar versucht worden, Abdichtvorrichtungen für die genannten Zwecke aus Kunststoff und damit preiswert herzustellen. Wegen der punktförmigen Einleitung der Spannkräfte in die beiden Platten gab es aber bei Kunststoff-Ausführungen regelmäßig Schwierigkeiten mit plastischen Verformungen und einer damit einhergehenden Verschlechterung der Abdichtung.

Eine teilweise aus Kunststoff bestehende Abdichtvorrichtung ist aus der DE-B 1 196 447 bekannt. Die bei diesem Stand der Technik verwendete Dichtung besteht aus zwei koaxial zueinander angeordneten, radial beabstandeten elastischen Hülsen, von denen die radial innere Hülse einen dem Außenumfang der Rohrleitung o.dgl. angepaßten Innendurchmesser und die radial äußere Hülse einen Außendurchmesser aufweist, der dem Innenumfang des Durchbruchs entspricht. Die Trägerhülse ist außen und innen mit Gewinde versehen, auf welches Druckstücke aufschraubbar sind. Durch Verdrehen der Druckstücke gegenüber der Trägerhülse werden die elastischen Hülsen axial komprimiert und üben dadurch in radialer Richtung die gewünschten Dichtkräfte aus. Die Spannkräfte werden hierbei nicht mehr punktförmig eingeleitet. Allerdings benötigt die bekannte Abdichtvorrichtung jeweils zwei außen- und zwei innenliegende Gewindeabschnitte, und neben den dichtenden Hülsen weist sie mindestens drei zusammenwirkende und zu montierende Teile auf, wodurch die Gestehungs- und die Montagekosten ungünstig beeinflußt werden.

Letzteres gilt auch für ganz aus Metall hergestellte Vorrichtungen, die bei punktförmiger Einleitung der Spannkräfte vergleichsweise massiv ausgeführt wurden und bei denen ein Korrosionsschutz vorgesehen sein mußte.

Vor diesem Hintergrund lag der Erfindung die Aufgabe zugrunde, eine Vorrichtung der eingangs genannten Art so weiterzubilden, daß sie sich ohne die Gefahr einer nachlassenden Dichtwirkung aus wenigen Kunststoffteilen herstellen läßt.

Die Lösung dieser Aufgabe besteht erfindungsgemäß darin, daß von jedem Spannelement ein axial gerichteter, auf das jeweils andere Spannelement weisender Rohrabschnitt ausgeht, der in radialer Richtung sowohl von der abzudichtenden Rohrleitung o.dgl. als auch vom Rand des Spannelementes beabstandet und dessen axiale Länge kleiner ist als die axiale Länge der Hülsen und daß der eine Rohrabschnitt mit Innengewinde sowie der andere Rohrabschnitt mit einem dem Innengewinde entsprechenden Außengewinde versehen ist und beide Rohrabschnitte in dem radialen Spalt zwischen den beiden Hülsen angeordnet sind, derart, daß die gewindefreie Außenfläche des einen Rohrabschnittes die radial äußere Hülse trägt und die gewindefreie Innenfläche des anderen Rohrabschnittes eine Stützfläche für die radial innere Hülse bildet. Vorteilhafte Ausgestaltungen dieser Lösung sind in den Unteransprüchen angegeben.

Der Kern der erfindungsgemäßen Lösung ist darin zu sehen, daß die Abdichtvorrichtung aus nur noch zwei miteinander verbundenen Teilen besteht, die beim Ineinanderschrauben sowohl die Abdichtung nach außen als auch die Abdichtung nach innen bewirken. Plastische Verformungen der Spannelemente sind auch bei deren Ausbildung aus Kunststoff nicht mehr zu befürchten.

Vorteilhaft erscheint darüber hinaus, daß die Zweiteilung der Dichtung und die zwischen den beiden Hülsen der Dichtung angeordneten festen Rohrabschnitte zu einer Vergleichmäßigung der radial wirkenden Kräfte der Dichtung über die axiale Länge der Dichtung hinweg führen, so daß sich gegenüber dem Stand der Technik weicherere Materialien für die Dichtung verwenden lassen, die auch gegenüber größeren Unebenheiten des Durchbruchs abzudichten in der Lage sind.

Die Erfindung ist nachstehend anhand von zwei in der Zeichnung dargestellten bevorzugten Ausführungsbeispielen näher erläutert. In der Zeichnung zeigen:

Fig. 1 einen Längsschnitt durch eine erste Ausführungsform der Vorrichtung;
Fig. 2 eine entlang der Linie II–II von Fig. 1 teilgeschnittene Stirnansicht der Vorrichtung gemäß Fig. 1;
Fig. 3 einen Längsschnitt durch eine zweite Ausführungsform der Vorrichtung;
Fig. 4 eine entlang der Linie IV–IV von Fig. 3 teilgeschnittene Stirnansicht der zweiten Ausführungsform und
Fig. 5 einen Schnitt entlang der Linie V–V von Fig. 3.

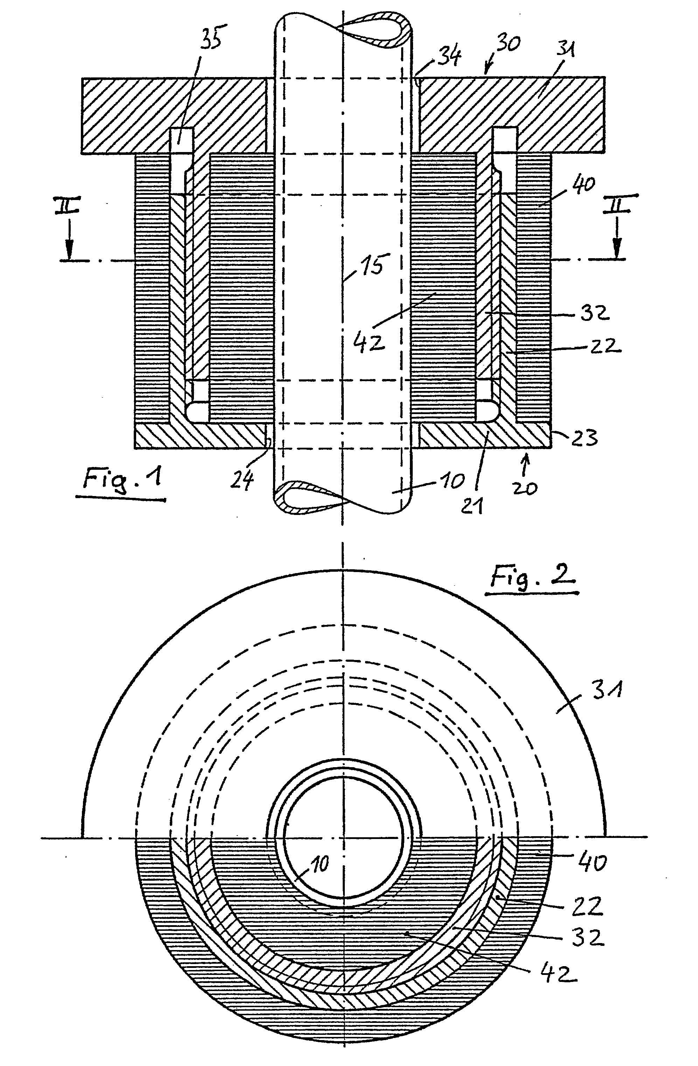

Die erste Ausführungsform gemäß den Fig. 1 und 2 betrifft eine Vorrichtung, die während der Montage einer Rohrleitung 10 auf diese aufgeschoben und in den nicht dargestellten Durchbruch hineingedrückt wird. Die einzelnen Elemente der Vorrichtung brauchen bei dieser Art der Montage nicht geteilt zu sein.

Die Vorrichtung weist zwei Spannelemente 20, 30 auf, von denen jedes aus einer ringförmigen Platte 21 bzw. 31 mit von dieser Platte ausgehendem Rohrabschnitt 22 bzw. 32 besteht. Fig. 1 weist aus, daß der Rand 23 der Platte 21 einen geringeren Durchmesser als der entsprechende Rand der anderen Platte 31 hat. Der resultierende radiale Überstand der anderen Platte 31 bildet eine Anlagefläche, bis zu der die Vorrichtung in den nicht dargestellten Durchbruch eingeschoben wird. Zum Durchführen der Rohrleitung 10 ist die Platte 21 mit einer Zentralbohrung 24 versehen. Die andere Platte 31 weist eine entsprechende Zentralbohrung 34 auf.

Der Rohrabschnitt 22 des Spannelementes 20 verläuft koaxial zur Achse 15 der Vorrichtung und ist ein integraler Bestandteil des Spannelementes. Er hat ausweislich der Zeichnung sowohl einen Abstand vom Rand 23 als auch von der Zentralbohrung 24 und ist mit einem Innengewinde versehen.

Der Rohrabschnitt 32 des Spannelementes 30 entspricht dem bereits geschilderten Rohrabschnitt 22. Sowohl sein Außen- als auch sein Innendurchmesser ist jedoch geringer als der jeweils entsprechende Durchmesser des Rohrabschnitts 22. Auf seinem Außenumfang ist der zum Spannelement 30 gehörige Rohrabschnitt 32 mit einem Außengewinde versehen, daß dem Innengewinde des anderen Rohrabschnitts 22 entspricht. Demgemäß lassen sich beide Rohrabschnitte miteinander verschrauben. Die Folge hiervon ist eine axiale Abstandsveränderung der beiden Platten 21, 31.

Die Vorrichtung ist mit einer zweiteiligen Dichtung ausgerüstet. Diese Dichtung wird von zwei koaxial zueinander angeordneten Hülsen 40, 42, Schläuchen o.dgl. gebildet, die üblicherweise aus Gummi bestehen.

Die radial äußere der beiden Hülsen 40 liegt mit ihrer radial innen liegenden Fläche am Außenumfang des Rohrabschnitts 22 an und erstreckt sich in axialer Richtung zwischen dem außen liegenden Randbereich der Platte 21 sowie einem entsprechenden Abschnitt der anderen Platte 31. Der Außendurchmesser der Hülse 40 ist gleich oder etwas größer als der Durchmesser des Randes 23 der Platte 21.

Die radial innen liegende Hülse 42 stützt sich in radialer Richtung einerseits an der Rohrleitung 10 und andererseits an der Innenfläche des Rohrabschnitts 32 des Spannelementes 30 ab. Sie wird in axialer Richtung eingefaßt zwischen den innen liegenden Abschnitten der Platten 21, 31.

Es sei an dieser Stelle angemerkt, daß sowohl die Platten 21, 31 als auch die innere Hülse 42 mehrere parallele Bohrungen analog zu den Bohrungen 24, 34 aufweisen können, wie es im Stand der Technik als solches bekannt ist, so daß mit einer Vorrichtung auch mehrere Rohrleitungen, Kabel o.dgl. gemeinsam abgedichtet werden können.

Zur Montage der Vorrichtung in dem nicht dargestellten Durchbruch wird diese über die aus dem Durchbruch herausragende Rohrleitung 10 geschoben. Unmittelbar vor dem Einführen in den Durchbruch werden die beiden Spannelemente 20, 30 soweit gegeneinander verdreht, daß sich die äußere Hülse 40 geringfügig nach außen wölbt. Hierdurch soll erreicht werden, daß die äußere Hülse 40 beim Einschieben der Vorrichtung in den Durchbruch bereits unter einer leichten Vorspannung an der Wand des Durchbruchs oder Futterrohres anliegt. Nach dem vollständigen Einschieben der Vorrichtung in den Durchbruch wird die außerhalb des Durchbruchs verbleibende Platte 31 von Hand oder mittels eines Werkzeuges verdreht, so daß sich deren Rohrabschnitt 32 weiter in den anderen Rohrabschnitt 22 hineinschraubt. Die erwähnte Vorspannung zwischen äußerer Hülse 40 und Durchbruch bewirkt dabei, daß sich das innerhalb des Durchbruches befindliche Spannelement 20 nicht mitdreht. Es läßt sich somit eine Abdichtung von der einen Seite des Durchbruches her erreichen, so daß die Vorrichtung auch dort eingesetzt werden kann, wo die baulichen Verhältnisse die Zugänglichkeit zum Durchbruch nur von einer Seite gestatten.

Die Betätigungsmöglichkeit der Vorrichtung, nur von einer Seite der Wand aus, setzt voraus, daß die Reibung zwischen äußerer Hülse 40 und Innenfläche des Durchbruchs sowie Außenfläche des Rohrabschnitts 22 so groß ist, daß das innen liegende Spannelement 20 durch das Verdrehen des äußeren Spannelementes 30 nicht mitgenommen wird.
Es ist davon auszugehen, daß in der Praxis immer
eine genügende Rauhigkeit auf der Seite des Durchbruches gegeben ist, die ein Mitdrehen der Hülse
40 verhindert. Entsprechend können auch die der
Hülse 40 zugekehrten Oberflächen des Spannelementes 20 aufgerauht sein, während sich die Reibung zwischen den beiden Rohrabschnitten, zwischen der Hülse 40 und der äußeren Platte 31 sowie
ggf. im Bereich der inneren Hülse 42 durch Zugabe
eines Gleitmittels kleinhalten läßt.

Die axiale Länge der beiden Rohrabschnitte 22,
32 muß so bemessen sein, daß sich die beiden
Spannelemente 20, 30 um ein ausreichendes axiales
Maß aufeinanderzu bewegen lassen. Andererseits
können diese Rohrabschnitte nicht wesentlich kürzer sein als die axiale Länge der Hülsen, damit diese
über ein ausreichendes Maß hinweg unterstützt
bleiben. Fig. 1 zeigt am Beispiel der Platte 31 des
Spannelementes 30, daß man ein ausreichendes
Maß axialer Bewegbarkeit der beiden Spannelemente zueinander und gleichzeitig eine vollständige Unterstützung der Hülse 40 im festgespannten (nicht
gezeichneten) Zustand dadurch erreicht, daß in der
axialen Verlängerung des Rohrabschnittes 22 eine
Ringnut 35 in der Platte 31 vorgesehen ist, in die
sich der Rohrabschnitt 22 beim anziehen der Vorrichtung hineinbewegen kann. Eine entsprechende
Ringnut kann im Bedarfsfall auch in der anderen
Platte 21 vorgesehen werden.

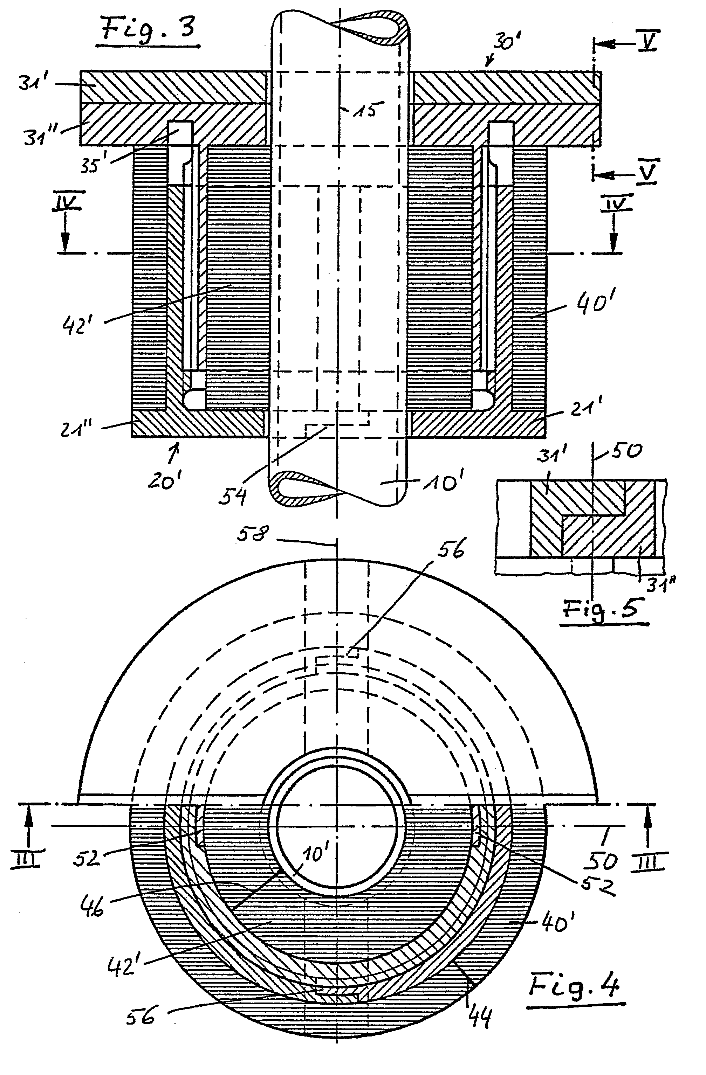

In den Fig. 3 bis 5 ist eine Abwandlung des
bereits beschriebenen Ausführungsbeispiels
dargestellt. Die Abwandlung besteht darin, daß die
beiden Spannelemente 20', 30' jeweils zweiteilig ausgebildet sind und die beiden Hülsen 40', 42' vor der
Montage aus flachem Material bestehen. Durch
diese Ausbildung wird erreicht, daß sich die Vorrichtung unabhängig davon einsetzen läßt, ob die
Rohrleitung 10 bereits fertig verlegt oder noch in
der Montage begriffen ist. Die Bestandteile der
Vorrichtung in der abgewandelten Ausführungsform lassen sich also auch noch nachträglich ihrem
Zweck entsprechend einsetzen, wenn der Installateur oder Elektriker den Bau bereits wieder verlassen hat.

Ausweislich den Fig. 3 und 5 besteht die ringförmige Platte des Spannelementes 30' aus zwei etwa
halbkreisförmigen Segmenten 31', 31", die entlang einer Mittellinie 50 mit zueinander komplementären
Falzen versehen sind, wie insbesondere die Fig. 5
zeigt. Der Rohrabschnitt 32' des Spannelementes
30' ist sinngemäß in zwei Halbschalen geteilt, die im
Bereich der Stoßstellen ebenfalls mit komplementären Falzen versehen sind, wie es in Fig. 4 bei 52 angedeutet ist. Das Spannelement 30' ist also zweiteilig und läßt sich dadurch um eine bereits verlegte
Rohrleitung 10' zusammensetzen.

In völlig analoger Weise ist auch das Spannelement 20' zweiteilig ausgebildet. Bei 54 sind die komplementären Falze der Segmente 21', 21" der zugehörigen Platte und bei 56 die Falze des zugehörigen
Rohrabschnitts 22' erkenntlich (Fig. 3 bzw. 4). Des
weiteren ist der Zeichnung zu entnehmen, daß die
Lage der Falze des Spannelementes 30' (Linie 50) um etwa 90° gegenüber der Lage der Falze des
Spannelementes 20' (Linie 58) verdreht ist.

Die Hülsen 40' bzw. 42' dieser zweiten Ausführungsform werden – wie erwähnt – entweder als flache Zuschnitte geliefert, die an ihren Stirnflächen
44' bzw. 46' unmittelbar von der Montage zusammengeklebt werden, oder aber die am Bau an diesen
Linien aufgeschnitten, um die Rohrleitung herumgelegt und dann wieder verklebt werden. Nach der
Verklebung der Hülsen wird die äußere Hülse 40'
über die aneinander liegenden Segmente 21', 21" des
Spannelementes 20' geschoben und hält dessen Teile zusammen. Hieran anschließend wird die innere
Hülse 42' in den Innenraum des Spannelementes 20'
eingeschoben, worauf die beiden von Hand zusammengehaltenen Segmente 31', 31" mit den entsprechenden Schalen ihres Rohrabschnittes in das
Spannelement 20' eingeschraubt werden können.
Es versteht sich, daß sich beim Einschrauben die
Lage der Linie 58 zur Lage der Linie 50 entsprechend der Drehbewegung ändert.

Im übrigen entspricht die Vorrichtung des zweiten Ausführungsbeispiels derjenigen des ersten
Ausführungsbeispiels.

## Patentansprüche

1. Vorrichtung zum Abdichten von von Rohrleitungen (10), Kabel o.dgl. durchsetzten Durchbrüchen von Wänden, Mauerwerk o.dgl., mit relativ zueinander bewegbaren, scheibenförmigen und mindestens eine Axialbohrung (24, 34) aufweisenden
Spannelementen (20, 30), zwischen denen eine aus
elastischem Material bestehende Dichtung (40, 42)
angeordnet und in dichtende Anlage am Außenumfang der Rohrleitung(en) sowie am Innenumfang des
Durchbruchs preßbar ist, wobei die Dichtung aus
zwei koaxial zueinander angeordneten, radial beabstandeten elastischen Hülsen (40, 42; 40', 42') besteht, von denen die radial innere Hülse (42; 42') einen dem Außenumfang der Rohrleitung (10; 10')
o.dgl. angepaßten Innendurchmesser und die radial
äußere Hülse (40; 40') einen Außendurchmesser
aufweist, der dem Innenumfang des Durchbruchs
entspricht, dadurch gekennzeichnet, daß von jedem
Spannelement (20, 30; 20', 30') ein axial gerichteter,
auf das jeweils andere Spannelement weisender
Rohrabschnitt (22, 32) ausgeht, der in radialer Richtung sowohl von der abzudichtenden Rohrleitung
o.dgl. als auch vom Rand (z.B. 23) des Spannelementes beabstandet und dessen axiale Länge kleiner ist als die axiale Länge der Hülsen und daß der
eine Rohrabschnitt (22) mit Innengewinde sowie der
andere Rohrabschnitt (32) mit einem dem Innengewinde entsprechenden Außengewinde versehen ist
und beide Rohrabschnitte in dem radialen Spalt zwischen den beiden Hülsen angeordnet sind, derart,
daß die gewindefreie Außenfläche des einen
Rohrabschnittes (22) die radial äußere Hülse (40;
40') trägt und die gewindefreie Innenfläche des anderen Rohrabschnitts (32) eine Stützfläche für die
radial innere Hülse (42; 42') bildet.

2. Vorrichtung nach Anspruch 1, dadurch gekennzeichnet, daß der Rohrabschnitt (22, 32) jedes
Spannelementes (20, 30; 20', 30') als integraler Bestandteil von einer ringförmigen Platte (21, 31; 21', 21", 31', 31") absteht.

3. Vorrichtung nach Anspruch 1 oder 2, dadurch gekennzeichnet, daß der Außendurchmesser (Rand 23) des einen Spannelementes (20; 20') gleich oder geringfügig kleiner als der Außendurchmesser der äußeren Hülse (40; 40') und der Außendurchmesser des anderen Spannelementes (30; 30') größer ist als der Außendurchmesser der äußeren Hülse.

4. Vorrichtung nach einem der Ansprüche 1 bis 3, dadurch gekennzeichnet, daß in der axialen Verlängerung mindestens eines der Rohrabschnitte (22) des einen Spannelementes (20; 20') in dem anderen Spannelement (30; 30') eine Ringnut (35; 35') vorgesehen ist.

5. Vorrichtung nach mindestens einem der vorhergehenden Ansprüche, dadurch gekennzeichnet, daß die radiale Dicke der radial inneren Hülse (42; 42') größer als die radiale Dicke der anderen Hülse (40; 40') ist.

6. Vorrichtung nach mindestens einem der vorhergehenden Ansprüche, dadurch gekennzeichnet, daß die axiale Länge der Hülsen (40, 42; 40', 42') im ungespannten Zustand etwa gleich dem Doppelten des Außendurchmessers der Rohrleitung (10; 10') ist.

7. Vorrichtung nach mindestens einem der vorhergehenden Ansprüche, dadurch gekennzeichnet, daß die Spannelemente (20', 30') in Axialrichtung (15) geschlitzt und zweiteilig ausgebildet und daß die beiden Hülsen (40', 42') aus viereckigen Zuschnitten gebildet und entlang zugehöriger Stirnflächen (Linien 44, 46) jeweils zusammengeklebt sind.

8. Vorrichtung nach Anspruch 7, dadurch gekennzeichnet, daß die Trennstellen zwischen den Teilen jedes Spannelementes von komplementären Falzen (Fig. 5) gebildet sind.

## Claims

1. Means for sealing off openings in walls, brickwork or the like, through which extend pipe conduits (10), cables or the like, using disc-like clamping elements (20, 30) which are movable relatively to one another and have at least one axial bore (24, 34), between which elements is arranged a packing (40, 42) consisting of elastic material and able to be pressed into a sealing position on the external periphery of the pipe conduit or conduits and also on the internal circumference of the opening, the packing consisting of two radially spaced flexible sleeves (40, 42; 40', 42') arranged coaxially of one another, the radially inner sleeve (42, 42') having an internal diameter adapted to the external circumference of the pipe conduit (10; 10') or the like and the radially outer sleeve (40; 40') having an external diameter which corresponds to the internal circumference of the opening, characterised in that, starting from each clamping element (20, 30; 20', 30'), there is an axially directed pipe section (22, 32) which points towards the respective other clamping element, the said section being spaced radially from both the pipe conduit or the like to be sealed off and from the rim (e.g. 23) of the clamping element and the axial length thereof being smaller than the axial length of the sleeves, and that the one pipe section (22) is formed with an internal thread and the other pipe section (32) is formed with an external thread conforming to the internal thread and that both pipe sections are so arranged in the radial gap between the two sleeves that the thread-free external surface of the one pipe section (22) carries the radially outer sleeve (40; 40') and the thread-free internal surface of the other pipe section (32) forms a supporting surface for the radially inner sleeve (42; 42').

2. Means according to claim 1, characterised in that the pipe section (22, 32) of each clamping element (20, 30; 20', 30') projects as an integral component from an annular plate (21, 31; 21', 21", 31', 31").

3. Means according to claim 1 or 2, characterised in that the external diameter (rim 23) of the one clamping element (20; 20') is equal to or smaller than the external diameter of the outer sleeve (40; 40') and the external diameter of the other clamping element (30; 30') is larger than the external diameter of the outer sleeve.

4. Means according to one of the claims 1 to 3, characterised in that, in the axial extension of at least one of the pipe sections (22) of the one clamping element (20; 20'), an annular groove (35; 35') is provided in the other clamping element (30, 30').

5. Means according to at least one of the preceding claims, characterised in that the radial thickness of the radially inner sleeve (42; 42') is greater than the radial thickness of the other sleeve (40; 40').

6. Means according to at least one of the preceding claims, characterised in that the axial length of the sleeves (40, 42; 40', 42') in the unclamped condition is about equal to twice the external diameter of the pipe conduit (10; 10').

7. Means according to at least one of the preceding claims, characterised in that the clamping elements (20', 30') are slotted in the axial direction (15) and formed in two parts and that the two sleeves (40', 42') are formed from rectangular blanks and are respectively stuck together along relevant end surfaces (lines 44, 46).

8. Means according to claim 7, characterised in that the separation points between the parts of each clamping element are formed by complementary rabbets (Figure 5).

## Revendications

1. Dispositif pour assurer l'étanchéité de percées dans des parois, des ouvrages de maçonnerie, etc., traversés par des conduits tubulaires (10), des câbles, ou etc., avec des éléments de serrage (20, 30) mobiles l'un par rapport à l'autre, ayant une forme de disque et présentant au moins un alésage axial (24, 34), entre lesquels est disposée une garniture d'étanchéité (40, 42) constituée dans une matière élastique qui peut être comprimée contre le pourtour extérieur de (des) conduit(s) tubulaire(s) ainsi que sur le pourtour intérieur de la percée, en assurant un appui étanche, sur lequel la garniture est constituée par deux manchons élastiques disposés coaxialement (40, 42; 40', 42') et présentant entre eux un intervalle en direction radiale, dont le manchon (42; 42') intérieur radialement présente un diamètre intérieur adapté au pourtour extérieur du conduit tubulaire (10, 10') ou similaire et dont le manchon extérieur radialement présente un diamètre extérieur qui correspond au pourtour intérieur de la percée, caractérisé en ce que: de chaque élément de serrage (20, 30; 20' 30') part une section de tube (22, 32) orientée axialement et dirigée vers l'autre élément de serrage respectif qui se trouve à quelque distance en direction radiale aussi bien du conduit tubulaire à étouper ou similaire que du bord (p.ex. 23) de l'élément de serrage et dont la longueur axiale est inférieure à la longueur axiale des manchons et en ce que l'une des sections de tube (22) est pourvue d'un filet intérieur et l'autre section de tube (32) d'un filet extérieur s'adaptant au filet intérieur et en ce que les deux sections de tube sont disposées dans la fente radiale entre les deux manchons, de manière telle que la surface extérieure dépourvue de filetage de l'une des sections de tube (22) porte le manchon extérieur radialement (40; 40') et que la surface intérieure dépourvue de filetage de l'autre section de tube (32) constitue une surface d'appui pour le manchon intérieur radialement (42; 42').

2. Dispositif selon la revendication 1, caractérisé en ce que la section de tube (22, 32) de chaque élément de serrage (20, 30; 20', 30') se trouve, en tant qu'élément constitutif intégral, à distance d'une plaque de forme annulaire (21, 31; 21', 21", 31', 31").

3. Dispositif selon la revendication 1 ou 2, caractérisé en ce que le diamètre extérieur (bord 23) d'un des éléments de serrage (20; 20') est égal ou légèrement inférieur au diamètre extérieur de l'autre manchon (40; 40') et en ce que le diamètre extérieur de l'autre élément de serrage (30; 30') est supérieur au diamètre extérieur de l'autre manchon.

4. Dispositif selon l'une des revendications 1 à 3, caractérisé en ce qu'il est prévu dans le prolongement axial d'au moins une des sections de tube (22) de l'un des éléments de serrage (20; 20') une gorge annulaire (35; 35') aménagée dans l'autre élément de serrage.

5. Dispositif selon une au moins des revendications qui précèdent, caractérisé en ce que l'épaisseur radiale du manchon intérieur radialement (42; 42') est supérieure à l'épaisseur radiale de l'autre manchon (40; 40').

6. Dispositif selon l'une au moins des revendications qui précèdent, caractérisé en ce que la longueur axiale des manchons (40, 42; 40', 42') est, à l'état non serré, à peu près égale au double du diamètre extérieur du conduit tubulaire (10; 10').

7. Dispositif selon l'une au moins des revendications qui précèdent, caractérisé en ce que les éléments de serrage (20', 30') sont fendus suivant la direction axiale (15) et constitués en deux parties et en ce que les deux manchons (40, 42') sont constitués par des plans quadrangulaires et sont respectivement collés ensemble le long de leurs faces frontales en regard (lignes 44, 46).

8. Dispositif selon la revendication 7, caractérisé en ce que les points de séparation entre les parties de chaque élément de serrage sont constitués par des pliures complémentaires (Fig. 5).

Fig. 1

Fig. 2

Fig. 3

31'

31"

35'

IV

42'

21"

20'

54

30'

V

V

15

40'

21'

10'

58

56

31'

50

Fig. 5

31"

III

52

46

42'

56

10'

50

52

40'

44

III

Fig. 4